# EUROPEAN PATENT APPLICATION

(11) **EP 2 551 666 A1**
(43) Date of publication of application: **30.01.2013**
(21) Application number: 11759252.7
(22) Date of filing: 15.03.2011
(51) Int. Cl.: G01N 27/419, F02D 41/14, F02D 45/00, G01N 27/26

(54) **OXYGEN CONTENT SENSOR INPUT DEVICE**

(30) Priority: 25.03.2010 JP 2010070997
(71) Applicant: Keihin Corporation, Shinjuku-ku, Tokyo 163-0539 (JP)
(72) Inventor: ASO, Ryuji, Shioya-gun Tochigi 329-1233 (JP); SUGAWARA, Hiaki, Shioya-gun Tochigi 329-1233 (JP)
(74) Representative: Hertz, Oliver
(86) International application number: PCT/JP2011/056023
(87) International publication number: WO 2011/118446

(57) **Abstract**

An oxygen concentration sensor input device (1) includes a sensor input circuit (4) that can freely supplies a flow-out current to an oxygen concentration sensor (2) that detects an oxygen concentration in exhaust gas of an internal combustion engine. The sensor input circuit includes an operational amplifier (12) that constitutes a voltage follower. A current value of the flow-out current is set such that a voltage waveform of a detection signal of the oxygen concentration sensor crosses a detection threshold on a low voltage side.

## Description

### TECHNICAL FIELD

The present invention relates to an oxygen concentration sensor input device, and more particularly relates to an oxygen concentration sensor input device that supplies a predetermined flow-out current to an oxygen concentration sensor that detects an oxygen concentration in exhaust gas of an internal combustion engine.

### BACKGROUND ART

In recent years, an electronic air-fuel ratio control device is provided in internal combustion engines to control an air-fuel ratio of an air-fuel mixture to be supplied to a target air-fuel ratio such as a stoichiometric air-fuel ratio. The air-fuel ratio control device includes an oxygen concentration sensor provided in an exhaust system of the internal combustion engine and a microcomputer that controls an air-fuel ratio of an air-fuel mixture to be supplied. The microcomputer determines the air-fuel ratio of the air-fuel mixture supplied to the internal combustion engine based on an output signal of the oxygen concentration sensor, and executes a feedback control of an amount of fuel or an amount of air to be supplied to the internal combustion engine based on a result of the determination.

This air-fuel ratio control device has been required to improve detection resolution of the oxygen concentration sensor and also widen its detection operating range in order to improve fuel economy of the internal combustion engine and keep exhaust gas cleaner. At the same time, the air-fuel ratio control device preferably has an additional function of immediately and accurately indicating a state of an abnormality when the abnormality occurs in its internal configuration.

Patent Document 1 relates to a gas concentration detector and discloses a configuration in which an amplifier circuit 14 connected in series to current-detecting resistors 15a and 15b performs a so-called rail-to-rail operation to obtain an output amplitude close to an upper limit or a lower limit of a power-source voltage range of the amplifier circuit 14, so that a sensor current of an A/F sensor 30 can be detected in this extended voltage range.

Patent Document 2 relates to an oxygen concentration detector and discloses a configuration in which a duty ratio of a pulse width modulation (PWM) signal that is output from an output port PWM1 of a microcomputer 2 and supplied to a non-inverting input terminal of an operational amplifier 16 is changed to change a voltage applied to a sensor AFS, so that the voltage applied to the sensor AFS can be adjusted with high resolution and high accuracy.

Patent Document 3 relates to an oxygen concentration detector and discloses a configuration in which the oxygen concentration detector includes a D/A converter 53 that inputs a voltage in response to a command from a microcomputer 3 to a differential amplifier circuit 21 as a reference voltage Vr, and the microcomputer 3 changes the reference voltage Vr input from the D/A converter 53 such that an output voltage Vo of the differential amplifier circuit 21 falls within an A/D-convertible range of an A/D converter 5, so that an oxygen concentration in detected gas can be detected both in a wide range and in a specific range with high accuracy.

Patent Document 4 relates to a connection circuit of oxygen sensors and an inspection method of correct sensor connection, and discloses a configuration in which in a connection circuit of floating oxygen sensors SV and SH that each have a low potential line and a high potential line connected to an amplifier AMP, the high potential line is connected to an offset voltage source Up, and the amplifier outputs a difference between an offset voltage value and an amplified value of a difference in potential between the high and low potential lines. The offset voltage is selected such that the output voltage is always apparently higher than zero and is lower than a predetermined threshold voltage when the sensors are connected correctly, thereby securely detecting a short circuit to the ground, for example, in the sensor connection.

### PRIOR ART DOCUMENT

### PATENT DOCUMENTS

Patent Document 1: Japanese Patent Application Laid-open No. 2000-046791
Patent Document 2: Japanese Patent Application Laid-open No. 2002-243694
Patent Document 3: Japanese Patent Application Laid-open No. 2004-69370
Patent Document 4: Japanese Patent Application Laid-open No. H5-223776

### SUMMARY OF THE INVENTION

### PROBLEM TO BE SOLVED BY THE INVENTION

However, according to studies made by the present inventors, although the configurations disclosed in Patent Documents 1 to 3 are intended to improve the detection resolution of the oxygen concentration sensor and also widen its detection operating range, there is no proposal in Patent Documents 1 to 3 to supply an additional current, with a simple configuration, to the oxygen concentration sensor, which may be required when these configurations are used.

The configuration disclosed in Patent Document 4 is intended to determine a connecting state of the oxygen concentration sensors. However, the offset voltage of the offset voltage source that connects to the high potential line of the oxygen concentration sensor needs to be set such that the output voltage is always apparently higher than zero and is lower than a predetermined threshold voltage when the oxygen concentration sensors are connected correctly. Consequently, this configuration is complicated.

That is, under the present circumstances, there has been a demand for a novel circuit configuration that can supply an additional current required by the oxygen concentration sensor that can improve its detection resolution and also widen its detection operating range with a simple configuration, and can also achieve a determination of an occurrence of a break in the oxygen concentration sensor or its related wire with a simple configuration.

The present invention has been achieved in view of the above studies, and an object of the present invention is to provide an oxygen concentration sensor input device that can supply an additional current required by an oxygen concentration sensor that can improve its detection resolution and also widen its detection operating range with a simple configuration, and can also achieve a determination of an occurrence of a break in the oxygen concentration sensor or its related wire with a simple configuration.

### MEANS FOR SOLVING THE PROBLEM

To achieve the above object, a first aspect of the present invention is to provide an oxygen concentration sensor input device comprising a sensor input circuit that can freely supply a flow-out current to an oxygen concentration sensor that detects an oxygen concentration in exhaust gas of an internal combustion engine, wherein the sensor input circuit includes an operational amplifier that constitutes a voltage follower, and a current value of the flow-out current is set such that a voltage waveform of a detection signal of the oxygen concentration sensor crosses a detection threshold on a side of the low voltage side.

According to a second aspect of the present invention, in addition to the first aspect, the current value of the flow-out current is set according to an input impedance of the oxygen concentration sensor.

According to a third aspect of the present invention, in addition to the first and second aspects, the flow-out current is supplied from a non-inverting input terminal of the operational amplifier to the oxygen concentration sensor by applying a voltage from a drive power source of the operational amplifier also to an electric circuit provided at an input stage of the operational amplifier.

According to a fourth aspect of the present invention, in addition to any one of the first to third aspects, in a case that a break occurs in an internal circuit of the oxygen concentration sensor or in an electric wire between the oxygen concentration sensor and the sensor input circuit, an output voltage of the operational amplifier becomes a clamping voltage of the operational amplifier.

According to a fifth aspect of the present invention, in addition to any one of the first to fourth aspects, the oxygen concentration sensor input device and a microcomputer to which a detection signal of the oxygen concentration sensor is input are arranged in a same package.

### EFFECT OF THE INVENTION

According to the configuration of the oxygen concentration sensor input device of the first aspect of the present invention, the sensor input circuit includes the operational amplifier that constitutes a voltage follower, and a current value of the flow-out current to the oxygen concentration sensor is set such that the voltage waveform of the detection signal of the oxygen concentration sensor crosses the detection threshold on the low voltage side. Therefore, a minute constant current for setting the oxygen concentration reference level or the like, which is required by the oxygen concentration sensor that can improve its detection resolution and also widen its detection operating range, can be supplied with a simple configuration, and an occurrence of a break in the oxygen concentration sensor or its related wire can also be determined with a simple configuration.

According to the configuration of the oxygen concentration sensor input device of the second aspect of the present invention, a current value of the flow-out current is set according to the input impedance of the oxygen concentration sensor, so that the constant current required by the oxygen concentration sensor can be supplied with a simpler configuration, and an occurrence of a break in the oxygen concentration sensor or the like can also be determined with a simple configuration.

According to the configuration of the oxygen concentration sensor input device of the third aspect of the present invention, the voltage of the drive power source of the operational amplifier is also applied to the electric circuit provided at an input stage of the operational amplifier, thereby supplying the flow-out current to the oxygen concentration sensor, so that the constant current required by the oxygen concentration sensor can be securely supplied with a simpler configuration, and an occurrence of a break in the oxygen concentration sensor or the like can also be determined with a simple configuration.

According to the configuration of the oxygen concentration sensor input device of the fourth aspect of the present invention, in the case that a break occurs in the internal circuit of the oxygen concentration sensor or in the electric wire between the oxygen concentration sensor and the sensor input circuit, the output voltage of the operational amplifier is the clamping voltage of the operational amplifier, so that the output voltage of the operational amplifier securely changes from a low level to a high level during the break, and consequently, an occurrence of the break in the oxygen concentration sensor or the like can be more securely determined with a simple configuration.

According to the configuration of the oxygen concentration sensor input device of the fifth aspect of the present invention, the oxygen concentration sensor input device and the microcomputer to which a detection signal of the oxygen concentration sensor is input are arranged in the same package, so that the entirety of the device configuration can be made compact.

### BRIEF DESCRIPTION OF THE DRAWINGS

[FIG. 1] FIG. 1 is a circuit diagram showing a configuration of the oxygen concentration sensor input device according to an embodiment of the present invention.
[FIG. 2] FIG. 2 is a schematic diagram showing an internal circuit of an operational amplifier provided in a sensor input circuit of the oxygen concentration sensor input device according to the embodiment.
[FIG. 3] FIG. 3 is a graph showing a rotational speed of an internal combustion engine, a temperature of an oxygen concentration sensor, and a detection signal from the oxygen concentration sensor according to the embodiment.
[FIG. 4] FIG. 4 is a partially enlarged view of a waveform diagram of a detection signal from the oxygen concentration sensor according to the embodiment.
[FIG. 5] FIG. 5 is a cross-sectional view showing a configuration in which the oxygen concentration sensor input device according to the present embodiment and an ECU are arranged and stacked in the same package.

### EMBODIMENT FOR CARRYING OUT THE INVENTION

Embodiments of an oxygen concentration sensor input device according to the present invention will be explained below in detail with reference to the accompanying drawings.

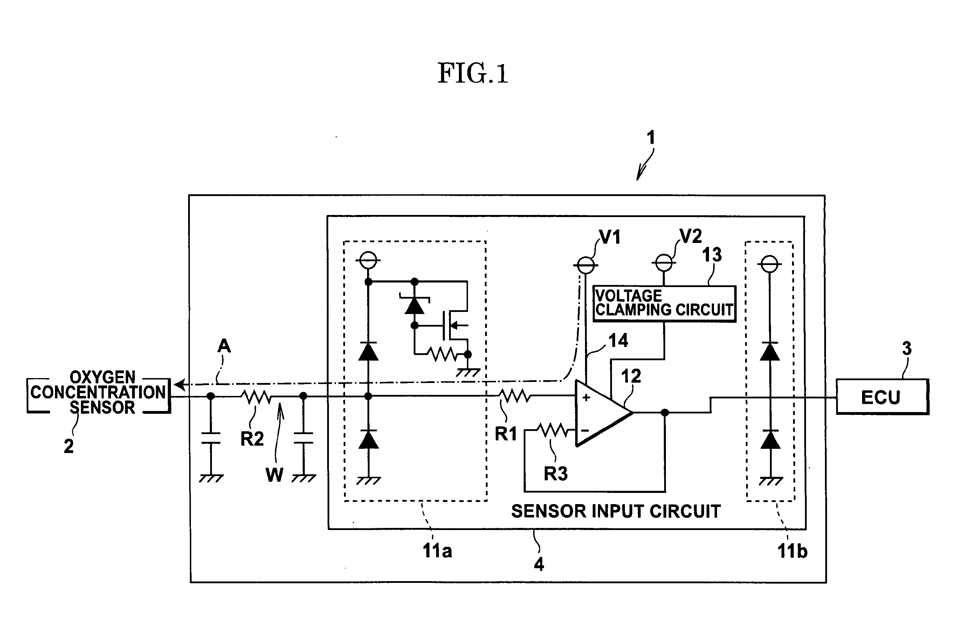

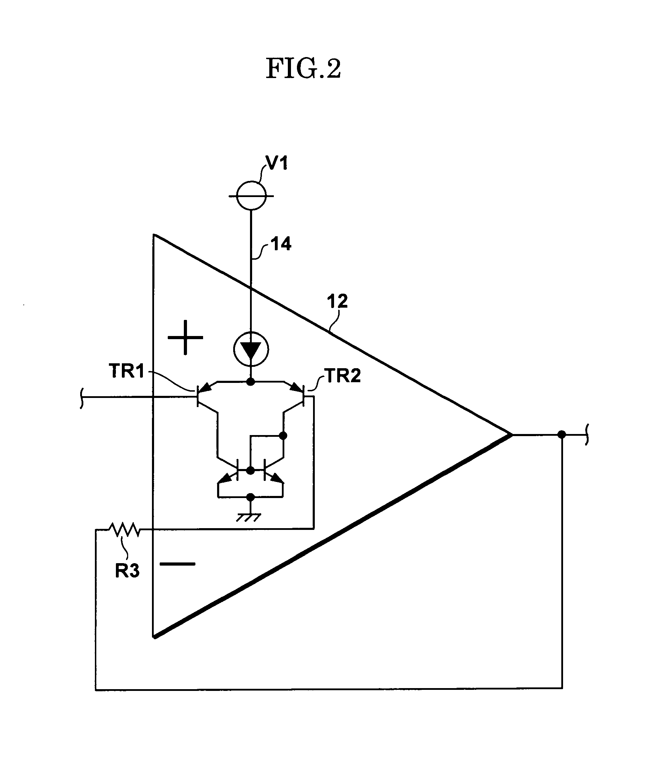

FIG. 1 is a circuit diagram showing a configuration of the oxygen concentration sensor input device according to the present invention. FIG. 2 is a schematic diagram showing an internal circuit of an operational amplifier provided in a sensor input circuit of the oxygen concentration sensor input device according to the present embodiment.

As shown in FIG. 1, the oxygen concentration sensor input device 1 includes a sensor input circuit 4 provided between an oxygen concentration sensor 2 and an ECU 3 that has a function of controlling an air-fuel ratio of a mixture of fuel and air to be supplied to an internal combustion engine (not shown) to a target air-fuel ratio by using the oxygen concentration sensor 2, and further includes an electric wire W that electrically connects between the oxygen concentration sensor 2 and the sensor input circuit 4.

Typically, the oxygen concentration sensor 2 includes no self-heating heater, and is a so-called heater-less type oxygen concentration sensor provided in an exhaust pipe (not shown) of the internal combustion engine near the internal combustion engine. As a drive voltage is applied from a power source (not shown), the oxygen concentration sensor 2 outputs a detection signal in response to an oxygen concentration in exhaust gas in the exhaust pipe to the electronic control unit (ECU) 3. A predetermined oxygen concentration reference level corresponding to a stoichiometric air-fuel ratio of the internal combustion engine is set to the oxygen concentration sensor 2. The detection signal of the oxygen concentration sensor 2 in response to the oxygen concentration in exhaust gas in the exhaust pipe is detected by a sensor-output detection circuit (not shown) typically provided separately, and is output to the ECU 3.

The ECU 3 is a calculation processing device such as a microcomputer, and has a calculation processing unit, a memory, and the like (not shown) . According to a control program stored in the memory, the ECU 3 controls the air-fuel ratio of the air-fuel mixture to be supplied to the internal combustion engine to a target air-fuel ratio based on the detection signal of the oxygen concentration sensor 2. Specifically, the ECU 3 determines the air-fuel ratio of the air-fuel mixture supplied to the internal combustion engine based on the detection signal of the oxygen concentration sensor 2, while adjusting a detection operating range (a dynamic range) of the oxygen concentration sensor 2 by changing its drive voltage, and executes a feedback control of an amount of fuel and an amount of air to be supplied to the internal combustion engine based on a result of the determination.

The sensor input circuit 4 is an electric circuit that is provided between the oxygen concentration sensor 2 and the ECU 3 and has a function of supplying a minute flow-out current for setting a predetermined oxygen concentration reference level corresponding to the stoichiometric air-fuel ratio of the internal combustion engine to the oxygen concentration sensor 2. The sensor input circuit 4 includes protection diode circuits 11a and 11b, an operational amplifier 12, and a voltage clamping circuit 13.

The protection diode circuit 11a is an electric circuit that is provided at a preceding stage of the operational amplifier 12 in the sensor input circuit 4 and protects the operational amplifier 12 by restricting its voltage value to a constant level when a noise signal of a surge voltage or the like is input to the operational amplifier 12.

The protection diode circuit 11b is an electric circuit that is provided at a subsequent stage of the operational amplifier 12 in the sensor input circuit 4 and protects the ECU 3 by restricting a voltage value of the operational amplifier 12 to a constant level when a noise signal of a surge voltage or the like is superimposed on an output from the operational amplifier 12 to be input to the ECU 3.

The operational amplifier 12 is driven by applying a constant voltage from a drive power source V1 to the operational amplifier 12 through an electric wire 14. The constant voltage from the drive power source V1 is also applied to an electric circuit provided at an input stage of the operational amplifier 12 through the electric wire 14 to generate a flow-out current with a relatively minute current value from the operational amplifier 12. That is, while details thereof are described later, the constant voltage applied to the operational amplifier 12 as described above flows through the electric wire W along a current path extending via resistors R1 and R2 as shown by an arrow A to generate a flow-out current from the oxygen concentration sensor input device 1 to the oxygen concentration sensor 2 and supply a predetermined constant current for setting a predetermined oxygen concentration reference level corresponding to the stoichiometric air-fuel ratio of the internal combustion engine to the oxygen concentration sensor 2.

That is, in this configuration, the flow-out current for setting a predetermined oxygen concentration reference level corresponding to the stoichiometric air-fuel ratio of the internal combustion engine to the oxygen concentration sensor 2 is generated by sharing the drive power source V1 of the operational amplifier 12 without providing a specific power source. For example, the flow-out current is set at a minute current value smaller than 1 (µA) to the oxygen concentration sensor 2 having a high input impedance on the order of more than 100 (kΩ) at the temperature of or around the oxygen concentration sensor 2 during its operation. Details on the setting of the flow-out current are described later.

As specifically shown in FIG. 2, in the operational amplifier 12, the electric circuit provided at its input stage typically includes a pair of PNP bipolar transistors Tr1 and Tr2. A constant voltage from the drive power source V1 is applied to the operational amplifier 12 through the electric wire 14. At the input stage of the operational amplifier 12, the constant voltage is split and applied to a circuit unit that electrically connects between emitters of the transistors Tr1 and Tr2. An inverting input terminal of the operational amplifier 12 is electrically connected to a base of the transistor Tr2 and is connected to an output terminal of the operational amplifier 12 via a resistor R3. Therefore, the operational amplifier 12 has a voltage-follower configuration with an amplification factor of 1.

On the other hand, a non-inverting input terminal of the operational amplifier 12 is electrically connected to a base of the transistor Tr1 and is connected to the oxygen concentration sensor 2 via the resistor R1, the protection diode circuit 11a, and the resistor R2 successively. Therefore, the constant voltage that is split and applied from the drive power source V1 through the electric wire 14 to the circuit unit that electrically connects between the emitters of the transistors Tr1 and Tr2 causes a flow-out current with a minute current value to flow out from the base of the transistor Tr1. The flow-out current flows into the oxygen concentration sensor 2 through the electric wire W electrically connected to the non-inverting input terminal of the operational amplifier 12 along the current path extending via the resistors R1 and 2 as shown by the arrow A.

The output terminal of the operational amplifier 12 is connected to the ECU 3 via the protection diode circuit 11b to supply an output voltage of the operational amplifier 12 to the ECU 3. The voltage output from the output terminal of the operational amplifier 12 is clamped at a level within a predetermined voltage range by the voltage clamping circuit 13 that is based on a reference power source V2. A clamping voltage of the voltage clamping circuit 13 is set smaller than the constant voltage applied from the drive power source V1 to the circuit unit that electrically connects between the emitters of the transistors Tr1 and Tr2 of the operational amplifier 12.

By employing the voltage-follower configuration in the operational amplifier 12, the input impedance of the operational amplifier 12 is typically set at a high impedance on the order of several tens of (MΩ) and a value of the high input impedance is sufficiently larger than a value of the input impedance of the oxygen concentration sensor 2 during its operation. Therefore, although the constant voltage is applied from the drive power source V1 through the electric wire 14 to the circuit unit that electrically connects between the emitters of the transistors Tr1 and Tr2, a value of the current flowing into the non-inverting input terminal of the operational amplifier 12 is normally very small. Accordingly, a low-level voltage that is almost zero is output from the output terminal of the operational amplifier 12 and is input to the ECU 3, and the operational amplifier 12 does not cause any unnecessary influence on the flow-out current supplied from the oxygen concentration sensor input device 1 to the oxygen concentration sensor 2.

On the other hand, at the time of an abnormality when a break occurs in an internal circuit of the oxygen concentration sensor 2 that operates based on the oxygen concentration reference level or in the electric wire W between the oxygen concentration sensor 2 and the sensor input circuit 4, and thus the oxygen concentration sensor 2 is disconnected from the operational amplifier 12, a current flows to the inverting input terminal of the operational amplifier 12 due to the constant voltage applied from the drive power source V1 through the electric wire 14 to the circuit unit that electrically connects between the emitters of the transistors Tr1 and Tr2. Because the clamping voltage of the voltage clamping circuit 13 is set smaller than the constant voltage applied from the drive power source V1 to the circuit unit that electrically connects between the emitters of the transistors Tr1 and Tr2 of the operational amplifier 12, that is, to the inverting input terminal of the operational amplifier 12, a voltage equal to the clamping voltage is output from the output terminal of the operational amplifier 12 and is input to the ECU 3. Therefore, in the case that a break occurs in the internal circuit of the oxygen concentration sensor 2 or in the related electric wire W, the ECU 3 detects that the output voltage of the operational amplifier 12 changes from a low-level voltage that is substantially zero to a high-level voltage that is equal to the clamping voltage, thereby determining an occurrence of the break.

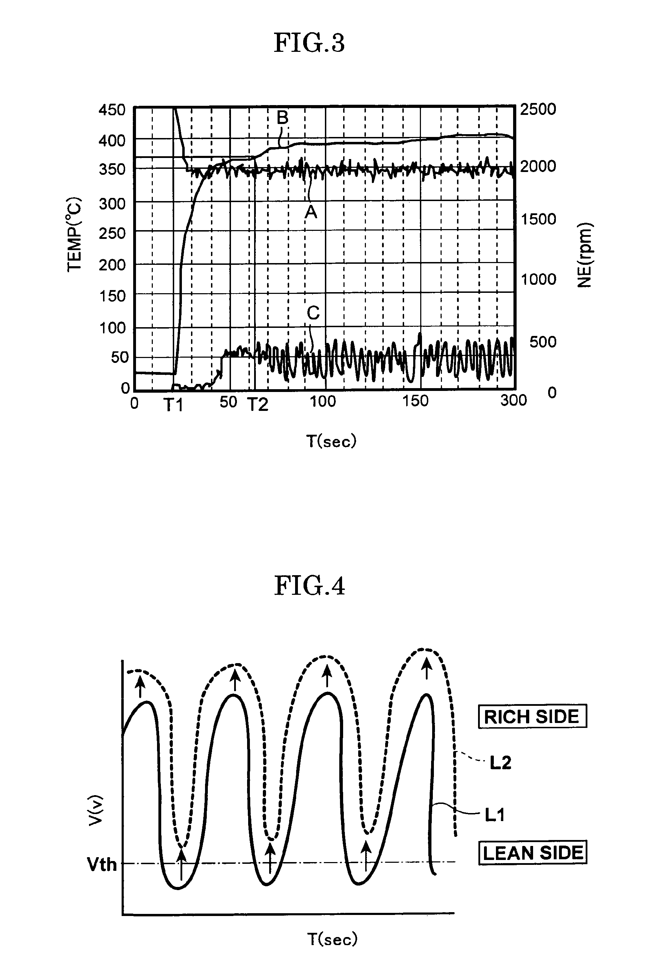

Next, in the oxygen concentration sensor input device 1 configured as described above, a relationship between the detection signal output from the oxygen concentration sensor 2 in response to the oxygen concentration in exhaust gas in the exhaust pipe and the flow-out current from the oxygen concentration sensor input device 1 to the oxygen concentration sensor 2 is described in detail with further reference to FIGS. 3 and 4.

FIG. 3 is a graph showing a rotational speed of an internal combustion engine, the temperature of an oxygen concentration sensor, and a detection signal from the oxygen concentration sensor according to the present embodiment, in which the horizontal axis represents a time T, the vertical axis on the left side represents a temperature TEMP of the oxygen concentration sensor, and the vertical axis on the right side represents a rotational speed NE of the internal combustion engine. FIG. 4 is a partially enlarged view of a waveform diagram of a detection signal from the oxygen concentration sensor according to the present embodiment, in which the horizontal axis represents a time T and the vertical axis represents a voltage V of the detection signal of the oxygen concentration sensor.

As shown in FIG. 3, at a time T1, the internal combustion engine is started by igniting the air-fuel mixture in its combustion chamber. The internal combustion engine then maintains a stable rotation state at an idling rotational speed of approximately 2000 (rpm) as shown by a curved line A, unless a vehicle throttle (not shown) is operated. Also, the temperature of or around the oxygen concentration sensor 2 provided in the exhaust pipe starts increasing as shown by a curved line B. At a time T2 when the temperature of or around the oxygen concentration sensor 2 reaches approximately 360 (°C) , the oxygen concentration sensor 2 starts outputting a detection signal as shown by a curved line C.

The waveform diagram of the detection signal of the oxygen concentration sensor 2 that outputs a detection signal as described above is shown by a curved line L1 in FIG. 4. An output voltage is high on a rich side where the oxygen concentration in exhaust gas of the internal combustion engine is low, that is, a fuel concentration is high, while an output voltage is low on a lean side where the oxygen concentration in exhaust gas of the internal combustion engine is high, that is, the fuel concentration is low. An upper peak and a lower peak in FIG. 4 correspond to a peak on the rich side and a peak on the lean side, respectively.

Due to the voltage applied from the drive power source V1 of the operational amplifier 12 through the electric wire 14 to the circuit unit that electrically connects between the emitters of the transistors Tr1 and Tr2, a flow-out current is supplied from the oxygen concentration sensor input device 1 to the oxygen concentration sensor 2 for setting a predetermined oxygen concentration reference level corresponding to the stoichiometric air- fuel ratio of the internal combustion engine. According to close observation of the waveform diagram of the detection signal of the oxygen concentration sensor 2, the waveform diagram tends to shift slightly upward in FIG. 4 from a state shown by the curved line L1 to a state shown by a curved line L2 due to the supply of the flow-out current.

At this time, if a lean-side peak value of the detection signal of the oxygen concentration sensor 2, which shifts upward in FIG. 4, exceeds a lean-side detection threshold Vth of the detection signal of the oxygen concentration sensor 2 in the ECU 3, a voltage waveform of the detection signal of the oxygen concentration sensor 2 cannot cross the lean-side detection threshold Vth. This causes a situation where the ECU 3 cannot accurately detect exhaust gas of the internal combustion engine on the lean side. Needless to mention, the lean-side detection threshold Vth in the ECU 3 is set larger than the lean-side peak value of the detection signal of the oxygen concentration sensor 2 by a predetermined amount.

Therefore, a value of the flow-out current from the oxygen concentration sensor input device 1 to the oxygen concentration sensor 2 needs to be set such that the lean-side peak value of the detection signal of the oxygen concentration sensor 2 does not exceed the lean-side detection threshold Vth in the ECU 3, that is, the voltage waveform of the detection signal of the oxygen concentration sensor 2 can cross the lean-side detection threshold Vth.

More specifically, the drive power source V1 of the operational amplifier 12 has an applied voltage on the order of several volts, and assuming that this voltage is applied to the oxygen concentration sensor 2 having a high input impedance on the order of more than 100 (kΩ) at the temperature of or near the oxygen concentration sensor 2 during its operation, a value of the flow-out current from the oxygen concentration sensor input device 1 to the oxygen concentration sensor 2 is within the order of several nanoamperes. The flow-out current flows through the electric wire W to the oxygen concentration sensor 2 along the current path A extending via the resistors R1 and R2. Because respective resistances of the resistors R1 and R2 are on the order of 10 (kΩ) or less, it is conceivable that a current value of the flow-out current is substantially determined by the input impedance of the oxygen concentration sensor 2 during its operation.

In the above configuration, when actually a voltage of the drive power source V1 of the operational amplifier 12 was split and applied through the electric wire 14 to the circuit unit that electrically connects between the emitters of the transistors Tr1 and Tr2 to supply a flow-out current from the non-inverting input terminal of the operational amplifier 12, the ECU 3 was able to determine the air-fuel ratio of the air-fuel mixture supplied to the internal combustion engine based on the detection signal input from the oxygen concentration sensor 2.

Therefore, it was estimated that a voltage of the drive power source V1 of the operational amplifier 12 is split and applied to the circuit unit that electrically connects between the emitters of the transistors Tr1 and Tr2 to supply a flow-out current from the non-inverting input terminal of the operational amplifier 12, as described above, thereby setting a predetermined oxygen concentration reference level corresponding to the stoichiometric air-fuel ratio of the internal combustion engine to the oxygen concentration sensor 2, and also outputting the detection signal of the oxygen concentration sensor 2 in a state where the detection signal does not excessively shift and the lean-side peak value does not exceed the detection threshold Vth, so that the voltage waveform of the detection signal of the oxygen concentration sensor 2 can cross the lean-side detection threshold Vth. Consequently, advantages of the above configuration were confirmed.

Next, an operation of the oxygen concentration sensor input device 1 having the above configuration is described in detail.

As the internal combustion engine is started, the drive power source V1 of the operational amplifier 12 in the sensor input circuit 4 applies a drive voltage to the operational amplifier 12, and also splits and applies the drive voltage applied to the operational amplifier 12 to the circuit unit that electrically connects between the emitters of the transistors Tr1 and Tr2 of the operational amplifier 12. In response to this, a flow-out current flows from the oxygen concentration sensor input device 1 to the oxygen concentration sensor 2 along the current path A extending via the resistors R1 and R2 to set a predetermined oxygen concentration reference level corresponding to the stoichiometric air-fuel ratio of the internal combustion engine to the oxygen concentration sensor 2.

When the temperature of or near the oxygen concentration sensor 2 reaches approximately 360 (°C), for example, the oxygen concentration sensor 2 accordingly outputs a detection signal that indicates an oxygen concentration in exhaust gas of the internal combustion engine to the ECU 3. Accordingly, the ECU 3 determines the air-fuel ratio of the air-fuel mixture supplied to the internal combustion engine based on the detection signal input from the oxygen concentration sensor 2.

At this time, a current that flows into the inverting input terminal of the operational amplifier 12 that employs a voltage-follower configuration is almost zero, and a low-level voltage is output from the output terminal of the operational amplifier 12. Also, the operational amplifier 12 does not cause any unnecessary influence on the flow-out current that flows to the oxygen concentration sensor 2.

On the other hand, in the case that, while the oxygen concentration sensor 2 detects an oxygen concentration in exhaust gas of the internal combustion engine and outputs a detection signal that indicates the oxygen concentration, a break occurs in the internal circuit of the oxygen concentration sensor 2 or in the electric wire W between the oxygen concentration sensor 2 and the sensor input circuit 4, and thus the oxygen concentration sensor 2 is completely disconnected from the operational amplifier 12, a current flows to the inverting input terminal of the operational amplifier 12 that employs a voltage-follower configuration. This is because the voltage from the drive power source V1 is split and applied through the electric wire 14 to the circuit unit that is provided at the preceding stage of the inverting input terminal of the operational amplifier 12 and that electrically connects between the emitters of the transistors Tr1 and Tr2.

Because the clamping voltage of the voltage clamping circuit 13 is set lower than the voltage applied to the preceding stage of the inverting input terminal of the operational amplifier 12, a high-level voltage that is equal to the clamping voltage is output from the output terminal of the operational amplifier 12 and is input to the ECU 3. Therefore, in the case that a break occurs in the internal circuit of the oxygen concentration sensor 2 or in the electric wire W, the ECU 3 detects that the output voltage of the operational amplifier 12 changes from a low level to a high level, thereby determining an occurrence of the break.

A mounting configuration of the oxygen concentration sensor input device 1 configured as described above and the ECU 3 is described in detail with further reference to FIG. 6.

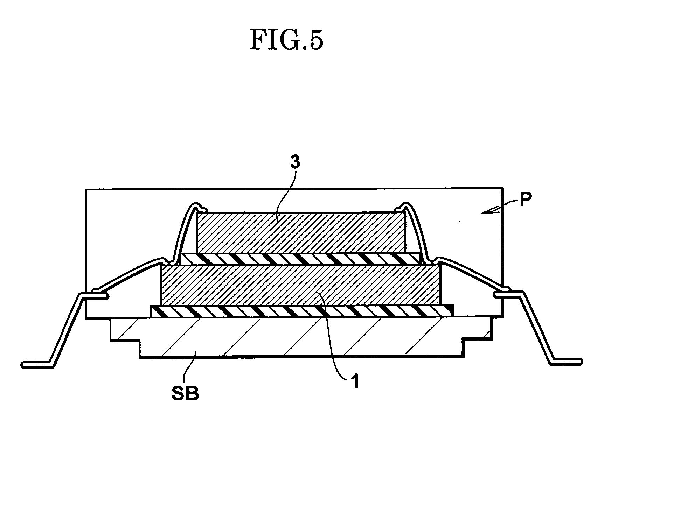

FIG. 5 is a cross-sectional view showing a configuration in which the oxygen concentration sensor input device according to the present embodiment and the ECU are arranged and stacked in the same package.

As shown in FIG. 5, the oxygen concentration sensor input device 1 including the sensor input circuit 4 that includes the protection diode circuits 11a and 11b, the operational amplifier 12, and the voltage clamping circuit 13, and the electric wire W that electrically connects between the oxygen concentration sensor 2 and the sensor input circuit 4 has a configuration to be sealed with the ECU 3 in the same package PK such as a casing and to be integrated with the ECU 3, and is placed on a desired support body SB and fixed to a vehicle or the like. The package PK is a resin seal formed by a transfer molding process, for example. According to this configuration, the entirety of a device configuration including the oxygen concentration sensor input device 1 and the ECU 3 can be made compact.

In the present embodiment, a flow-out current supplied from the oxygen concentration sensor input device 1 to the oxygen concentration sensor 2 is used for setting the oxygen concentration reference level corresponding to the stoichiometric air-fuel ratio of the internal combustion engine to the oxygen concentration sensor 2. However, needless to mention that the present invention is not limited thereto, and the flow-out current can be also used appropriately for other currents of the oxygen concentration sensor 2 such as a bias current.

According to the above configuration, the sensor input circuit includes the operational amplifier that constitutes a voltage follower, and a current value of the flow-out current to the oxygen concentration sensor is set such that the voltage waveform of the detection signal of the oxygen concentration sensor crosses the detection threshold on the low voltage side. Therefore, a minute constant current for setting the oxygen concentration reference level or the like, which is required by the oxygen concentration sensor that can improve its detection resolution and also widen its detection operating range, can be supplied with a simple configuration, and an occurrence of a break in the oxygen concentration sensor or its related wire can also be determined with a simple configuration.

A current value of the flow-out current is set according to the input impedance of the oxygen concentration sensor, so that the constant current required by the oxygen concentration sensor can be supplied with a simpler configuration, and an occurrence of a break in the oxygen concentration sensor or the like can also be determined with a simple configuration.

The voltage of the drive power source of the operational amplifier is also applied to the electric circuit provided at an input stage of the operational amplifier, thereby supplying the flow-out current to the oxygen concentration sensor, so that the constant current required by the oxygen concentration sensor can be securely supplied with a simpler configuration, and an occurrence of a break in the oxygen concentration sensor or the like can also be determined with a simple configuration.

In the case that a break occurs in the internal circuit of the oxygen concentration sensor or in the electric wire between the oxygen concentration sensor and the sensor input circuit, the output voltage of the operational amplifier is the clamping voltage of the operational amplifier, so that the output voltage of the operational amplifier securely changes from a low level to a high level during the break, and consequently, an occurrence of the break in the oxygen concentration sensor or the like can be more securely determined with a simple configuration.

The oxygen concentration sensor input device and the microcomputer to which a detection signal of the oxygen concentration sensor is input are arranged in the same package, so that the entirety of the device configuration can be made compact.

In the present invention, the types, arrangements, and numbers of constituent elements are not limited to those described in the above embodiment, and it is needless to mention that changes can be appropriately made without departing from the scope of the invention, such as replacing these constituent elements with other elements having equivalent operational effects.

### INDUSTRIAL APPLICABILITY

As explained above, according to the present invention, it is possible to provide an oxygen concentration sensor input device that can supply an additional current required by an oxygen concentration sensor that can improve its detection resolution and also widen its detection operating range with a simple configuration, and can also achieve a determination of an occurrence of a break in the oxygen concentration sensor or its related wire with a simple configuration, and is expected to be widely applicable to an air-fuel ratio control device of a vehicle or the like because of its general-purpose and universal characteristics.

## Claims

1. An oxygen concentration sensor input device comprising a sensor input circuit that can freely supply a flow-out current to an oxygen concentration sensor that detects an oxygen concentration in exhaust gas of an internal combustion engine, wherein
the sensor input circuit includes an operational amplifier that constitutes a voltage follower, and a current value of the flow-out current is set such that a voltage waveform of a detection signal of the oxygen concentration sensor crosses a detection threshold on a side of the low voltage side.

2. The oxygen concentration sensor input device according to claim 1, wherein the current value of the flow-out current is set according to an input impedance of the oxygen concentration sensor.

3. The oxygen concentration sensor input device according to claim 1, wherein the flow-out current is supplied from a non-inverting input terminal of the operational amplifier to the oxygen concentration sensor by applying a voltage from a drive power source of the operational amplifier also to an electric circuit provided at an input stage of the operational amplifier.

4. The oxygen concentration sensor input device according to claim 1, wherein in a case that a break occurs in an internal circuit of the oxygen concentration sensor or in an electric wire between the oxygen concentration sensor and the sensor input circuit, an output voltage of the operational amplifier becomes a clamping voltage of the operational amplifier.

5. The oxygen concentration sensor input device according to claim 1, wherein the oxygen concentration sensor input device and a microcomputer to which a detection signal of the oxygen concentration sensor is input are arranged in a same package.
